## Europäisches Patentamt
## European Patent Office
## Office européen des brevets

(19)

(11) Veröffentlichungsnummer: **0 121 855**
**B2**

(12) **NEUE EUROPÄISCHE PATENTSCHRIFT**

(45) Veröffentlichungstag der neuen Patentschrift:
**09.05.90**

(21) Anmeldenummer: **84103342.6**

(22) Anmeldetag: **27.03.84**

(51) Int. Cl.⁵: **C 08 J 3/12,** C 08 L 57/00,
C 08 L 55/02, C 08 L 25/12,
C 08 L 25/14, C 08 L 33/12,
C 08 L 33/20

(54) **Pfropfpolymerisat enthaltende Polymerisatpulver.**

(30) Priorität: **07.04.83 DE 3312541**

(43) Veröffentlichungstag der Anmeldung:
**17.10.84 Patentblatt 84/42**

(45) Bekanntmachung des Hinweises auf die
Patenterteilung:
**04.02.87 Patenblatt 87/06**

(45) Bekanntmachung des Hinweises auf die
Entscheidung über den Einspruch:
**09.05.90 Patentblatt 90/19**

(84) Benannte Vertragsstaaten:
**DE FR GB IT**

(56) Entgegenhaltungen:
**DE-A-1 569 144**
**DE-A-1 694 522**
**DE-B-1 694 918**
**DE-B-1 694 946**
**GB-A-1 113 348**
**GB-A-1 568 469**
**GB-A-2 044 779**

**Die Akte enthält technische Angaben, die nach
dem Eingang der Anmeldung eingereicht
wurden und die nicht in dieser Patentschrift
enthalten sind.**

(73) Patentinhaber: **BAYER AG**
**D-5090 Leverkusen 1 Bayerwerk (DE)**

(72) Erfinder: **Lindner, Christan, Dr.**
**Riehlerstrasse 200**
**D-5000 Koeln 60 (DE)**
Erfinder: **Uerdingen, Walter, Dr.**
**Humperdinckstrasse 41**
**D-5090 Leverkusen (DE)**
Erfinder: **Hinz, Jürgen, Dr.**
**Kemmerhofstrasse 181**
**D-4150 Krefeld (DE)**
Erfinder: **Trabert, Ludwig, Dr.**
**Bodelschwinghstrasse 18**
**D-4150 Krefeld (DE)**

EP 0 121 855 B2

Courier Press, Leamington Spa, England.

## EP 0 121 855 B2

**Beschreibung**

Die Erfindung betrifft ein verbessertes Verfahren zur Herstellung von Polymerisatpulver auf der Basis von Pfropfpolymerisaten und kautschukelastischen Polymeren zur Herstellung von Gemischen aus Pfropfpolymerisaten und Kautschuken können entsprechende.

Polymerisatlatices durch Emulsionpolymerisation hergestellt, miteinander gemischt und dann gemeinsam ausgefällt werden. Meist werden dabei aber nicht technisch brauchbare Pulver erhalten, sondern mehr oder weniger agglomerierte, grobe Materialien, die technologisch nicht verarbeitbar sind, sondern einer Nachbereitung (Mahlung, Bepuderung) bedürfen.

Aus der DI—B—16 94 918 ist ein Verfahren zur Herstellung eines trockenen, nichtklebenden und während des Lagerns nicht zusammenbackenden Pulvers aus festen Elastomeren bekannt, in welchen Elastomerlatices und Latices spröder harzartiger Homopolymerisate cokoaguliert werden. Durch den Anteil an harzartigen Homopolymerisaten in der Mischung können jedoch anwendungstechnische Eigenschaften der Elastomere ungünstig beeinflußt werden.

Viele technologisch für die Polyvinylchlorid-Modifizierung interessante, Pfropfpolymerisate enthaltende Pulver haben Gesamtzusammensetzungen, die eine direkte Aufarbeitung zu Pulvern durch gemeinsame Fällung von Latexmischungen unmöglich machen.

Gegenstand der Erfindung ist ein Verfahren zur Herstellung von Polymerisatgemischen in Pulverform aus

A) 90—20 Gew.-% wenigstens eines weichen kautschukelastichen Polymerisats mit einer Glasübergangstemperatur ≦35°C und

B) 10—80 Gew.-% eines Pfropfkautschuks, dessen Kautschukanteil zwischen 10 und 50 Gewß% ausmacht und der eine Glasübergangstemperatur <20°C hat,
dadurch gekennzeichnet, daß man

in einer Stufe ein Gemisch eines Latex von A) und eines Teils des erforderlichen Latex von B) bei Temperaturen von 20—100°C durch Zusatz eines Koaguliermittels koaguliert,

in einer zweiten Stufe den noch fehlenden Teil des Latex von B) in einer Menge von 5—25 Gew.-% (betofen auf fir Gesamtuischung) zufügt so daß das gewünschte Mengenverhältnis von A) und B) erreicht ist, wobei gegebenenfalls gleichzeitig oder danach weiteres Koaguliermittel und/oder Wasser zugefügt wird, bis ein Feststoff/Wasser-Gewichtsverhältnis von 1:3 bis 1:15 erriecht ist, und

in einer dritten Stufe das ausgefällte Gemisch von A) und B) von der wäßrigen Phase trennt und trocknet.

Der Anteil an Pfropfpolymerisat in dem erhaltenen Gemisch ist bevorzugt 20—50 Gew.-%.

Das Verfahren arbeitet in der ersten Verfahrensstufe mit Latexmischungen aus A und B; nach Koagulation dieser Latexmischung wird dann in der zweiten Verfahrensstufe der fehlende Teil des Polymerisates B (in Form eine Latex) hinzugefügt; dieser fehlende Teil von B ist dann so zu bemessen, daß in der zweiten Verfahrensstufe 5—25 Gew.-% (der Gesamtmischung von A und B) B in Latexform nachdosiert bzw. eingespeist wird. Besonders bevorzugt werden in der ersten Verfahrensstufe Mischungen aus Dien- bzw. Alkylacrylatkautschuken (als A) eingesetezt.

Bevorzugte erfindungsgemäße Polymerisatpulver bestehen aus 95—40 Gew.-% A) und 5—60 Gew.-% B).

Komponente A ist ein Kautschuk mit Glasübergangstemperaturen ≦35°C, z.B. ein Homo- oder Copolymerisat von konjugierten Dienen, insbesondere Butadien mit olefinisch ungesättigten Monomeren, insbesondere Vinylmonomeren wie Styrol, Acrylnitril, Alkyl-(meth)acrylaten, Vinylestern, Vinylethern, Vinylketonen oder ein Homo- oder Copolymerisat von $C_1$—$C_{10}$-Alkylacrylaten, insbesondere $C_4$—$C_8$-Alkylacrylaten mit olefinisch ungesättigten Monomeren, insbesondere Vinylmonomeren, wie Styrol, Acrylnitril, Alkylmethacrylaten, Vinylestern, Vinylether. In den entsprechenden Latices liegen diese Polymerisate als Teilchen eines Durchmessers (d50) von etwa 50—500 nm, insbesondere von 100—400 nm vor. Sie sind vorzugsweise wenigstens partiell vernezt und haben Gelgehalte von 50—98 Gew.-%. Sie können durch radikalisch initiierte Emulsionspolymerisation in wäßrigen Medien nach bekannten Verfahren hergestellt werden.

Im folgenden wird die Komponente B beschrieben: Komponente B ist ein Propfkautschuk.

Pfropfkautschuke B enthalten 10—50 Gew.-%, vorzugsweise 10—35 Gew.-% kautschuk. Sie stellen ebenfalls Emulsionspolymerisate von Vinylmonomeren auf Dien- oder Alkylacrylat-Kautschuke dar, insbesondere von Styrol, Acrilinitril, Methylmethacrylat oder Mischungen davon auf teilchenförmige, vernetzte Kautschuke.

Bevorzugte Pfropfkautschuke B) sind Pfropfpolymerisate von Styrol, α-Methylstyrol, Acrilinitril, Methylmethacrylat oder Mischungen daraus auf Dienkautschuke oder Alkylacrylat-Kautschuke mit bis zu 50 Gew.-%, bevorzugt 20—40 Gew.-% Kautschukanteil, bezogen auf Pfropfpolymer. Besonders bevorzugte Kautschuke sind Polybutadien und Polyalkylacrylate mit hoher Vernetzung und teilchenförmiger Struktur.

Die erfindungsgemäßen Polymerisatgemische in Pulverform können hergestellt werden, indem man in einer ersten Stufe Mischungen von Latices der Polymerisate A und eines Teils von B, gegebenenfalls nach Stabilisierung z.B. mit phenolischen Antioxidantien, bei 20—100°C, bevorzugt 50—100°C, durch Säuren, Basen oder wasserlösliche Salze, gegebenenfalls unter Zusatz von Wasser koaguliert, wobei unter Rühren eine sedimentierende Suspension de Polymeren gebildet wird, dann

2

in einer zweiten Stufe weiteres Polymer B in Latexform einer solchen Menge einbringt, bis das gewünschte Gewichsverhältnis von A:B (Gesamtzusammensetzung) im Bereich von 90—20 Gew.-% A und 10—80 Gew.-% B erreicht ist, wobei gegebenenfalls Wasser und Koaguliermittel nachgesetzt wird, so daß eine Suspension mit einem Festoff/Wasser-Gewichtsverhältnis von 1:3 bis 1:15 resultiert, und anschließend

in einer dritten Stufe das resultierende Polymerisatgemisch aus der Suspension abtrennt, z.B. durch Filtration oder Zentrifugieren und anschließend trocknet, wobei ein Pulver mit einem durchschnittlichen Teilchendurchmesser von 0,05—5 mm erhlaten wird.

Die erfindungsgemäße Koagulation kann halbkontinuierlich oder vollkontinuierlich durchgeführt werden, bevorzugt ist die kontinuierliche Arbeitsweise.

Die erfindungsgemäße hergestellten Pulver zeichnen sich durch verbesserte Rieselfähigkeit, Lagerstabilität (auch bei höheren Lagertemperaturen), geringer Staubneigung, bequeme technische Handhabbarkeit und Dosierbarkeit in kontinuierlich arbeitenden Mischvorrichtungen zur Herstellung thermoplastischer Formmassen aus.

Die erfindungsgemäß hergestellten Pulver lassen sich, gegebenenfalls nach Zusetzen von üblichen Verarbeitungshilfsmitteln, zu thermoplastichen Formmassen guter Zähigkeit mit matten oder glänzenden Oberflächen und verbessertem Rohton aufarbeiten.

Insbesondere eignen sich die erfindungsgemäß hergestellten Pulver zur Modifizierung von üblichen ABS-, MBS-, ASA- und Vinylchlorid-Polymerisaten (PVC), weil sie sich besonders leicht in den Schmelzen dieser Polymerisate verteilen und dispergieren lassen (auch wenn vernetzte Pfropfkautschukteilchen vorliegen). Lange Verweilzeiten, hohe Temperaturen und große Scherkräfte während der Compoundierung werden vermieden und damit eine Schädigung der thermoplastischen Formmassen während der Compoundierung. Es resultieren Formmassen mit verbesserten Eigenschaften, guter Gleichmäßigkeit (Stippenfreiheit von Folien) und damit verbesserten anwendungstechnischen Eigenschaften.

ABS-Polymerisate, die sich zur Modifizierung eignen, sind Pfropfpolymerisate von Styrol/Acrylnitril-Mischungen auf Dienmonomerkautschuke mit Kautschukgehalten von 5—40 Gew.-%, sie können anteilmäßig unterschiedliche Menge ungepfropfter Styrol-Acrylnitril- bzw. α-Methylstyrol-Acrylnitril-Copolymerisate enthalten.

MBS-Polmerisate, die sich zur Modifizierung eignen, sind Pfropfpolymerisate von Methylmethacrylat, ggf. in Mischung mit Styrol, auf Dienmonomerkautschuk, welche ggf. als Comonomer Styrol enthalten können. ASA-Polymerisate sind dagegen Pfropfpolymerisate von Styrol-Acrylnitril-Mischungen auf vernetzte Alkylacrylatkautschuke und weisen z.B. Kautschukgehalte von 5—40 Gew.-% auf.

## Beispiele

I. A) *Eingesetzte Latices von Kautschuken (Produkt A):*

1) Latex eines Butadien-Acrylnitril-Copolymerisates mit einem Gehalt von 30 Gew.-% Acrylnitril und einem mittleren Latexteilchendurchmesser ($d_{50}$) von 0,15 µm; Gelanteil 75 Gew.-%.

2) Latex eines vernetzten Butylacrylat-Acrylnitril-Copolymerisates mit einem Gehalt von 30 Gew.-% Acrylnitril und einem mittleren Latexteilchendurchmesser ($d_{50}$) von 0,15 µm; Gelanteil 85 Gew.-%.

B) *Eingesetzte Latices von Pfropfkautschuken (Produkt B):*

1) Latex eines Pfropfpolymerisats von Styrol und Acrylnitril (im Gew.-Verhältnis 66:34) auf vernetztes Polybutadien eines mittleren Teilchendurchmessers ($d_{50}$) von 0,4 µm. Das Pfropfpolymer enthält 30 Gew.-% Kautschuk.

2) Latex eines Pfropfpolymerisats von Styrol und Acrylnitril (im Gew.-Verhältnis 66:34) auf vernetztes Poly-n-butylacrylat eines mittleren Latexteilchendurchmessers ($d_{50}$) von 0,45 µm. Das Pfropfpolymer enthält 25 Gew.-% Kautschuk.

## II. *Erfindungsgemäße Pulverbereitung*

Latices des Polymerisats A werden mit Latices des Polymerisats B gemischt und anschließend mit 1,2% eines phenolischen Antioxidants stabilisiert; die Latexmengen werden so gewählt, daß x Gew.-Teile Polymer A und y Gew.-Teile Polymer B in der Latexmischung oder in dem Latex vorliegen. Diese Latices werden anschließend bei 95°C mit einer Lösung von 150 Gew.-Teilen $MgSO_4xH_2O$ (Bittersalz) und 50 Gew-Teilen Essigsäure in 5000 Gew.-Teilen Wasser (bezogen auf 1000 Gew.-Teile Polymerfeststoff der Latices) als Elektrolytlösung vermischt und koaguliert. Nachdem alles Polymer koaguliert ist, werden weiter z Gew.-Teile Polymer B (in Form eines stabilen Latex) bei 55°C so in die gebildete Suspension eingespeist, daß auch dieser Latex koaguliert. Danach heizt man die gesamte Suspension 1/2 Std. auf 95—98°C auf. Nach Abkühlen auf 20°C wird mit Zentrifugen filtriert und danach bis zur Elektrolytfreiheit gewaschen. Das Feuchtgut wird anschließend bei 70°C getrocknet.

## III. *Vergleich*

In diesem Fall werden Latices des Polymerisats A mit Latices des Polymerisats B vermischt, wobei die Latexmengen so gewählt werden, daß in den Mischungen x Gew.-Teile A und (y + z) Gew.-Teile B vorliegen. Nach Stabilisierung wie unter II wird mit einer wäßrigen $MgSO_4xH_2O$/Essigsäure-Lösung der Zusammensetzung wie unter II gefällt (pro 1000 Gew.-Teile Polymer A + B werden 5200 Gew.-Teile Elektrolytlösung verwendet). Nach erfolgter Koagulation bei 95°C heizt man die gesamte Suspension 1/2 Std. auf 95—98°C auf. Die weitere Aufarbeitung ist analog II.

IV. (Tabelle 1: Hergestellte Pulver

| Pulver | A Gew.-Teile (x) | B Gew.-Teile (y) | B Gew.-Teile (z) | Verfahren II | Verfahren III |
|---|---|---|---|---|---|
| 1 | Polymer A1 40 | Polymer B1 50 | Polymer B1 10 | x | |
| 2 | Polymer A2 40 | Polymer B2 50 | Polymer B2 10 | x | |
| 3 | Polymer A1 40 | Polymer B1 50 | Polymer B1 10 | x | |

V. Pulvereigenschaften
Korngrößenanalysen der trockenen Pulver IV

Pulver 1:

| Korngröße (mm) | Prozentanteil (Gew.%) |
|---|---|
| > 1 | 72,4 |
| 0,8 — 1 | 4,5 |
| 0,4 — 0,8 | 10,3 |
| 0,2 — 0,4 | 3,8 |
| 0,1 — 0,2 | 4,9 |
| 0,05 — 0,1 | 3,3 |
| <0,05 | 0,8 |

Pulver 2:

| Korngröße (mm) | Prozentanteil (Gew.%) |
|---|---|
| > 1 | 65,2 |
| 0,8 — 1 | 6,9 |
| 0,4 — 0,8 | 15,5 |
| 0,2 — 0,4 | 7,0 |
| 0,1 — 0,2 | 4,0 |
| 0,05 — 0,1 | 1,1 |
| <0,05 | 0,2 |

Packstärke (lbs) der Pulver IV 1 und IV 5

|  | Pulver 1 |
| --- | --- |
| Keine Brückenbildung | $40^{19''}$ [1] |
| Brückenbildung | >40 |

[1] Hochgestellte Zahl bedeutet Haltezeit der Brücken in Sekunden.

Beschreibung der Prüfmethode/verwendete Abkürzungen
Korngrößenanalyse
Die Analyse erfolgte mit einer Prüfsiebmaschine; die Prüfsieb waren nach DIN 4188 genormt; die Siebmachine arbeitete mit Vibrationssieben (Hersteller: Fa. Harer u. Brecker, Typ EMC. 200—61).
Der L-Wert entspricht

$$\frac{\eta \text{ spez.}}{C}$$

bei C = 5 g/l in DML bei 25°C.

Die Teilchengrößen stellen mittlere Teilchendurchmesser d so dar (siehe dazu Ultrazentrifugen-Messungen nach W. Scholtan et. al. Kolloidz. u. Z. Polymere 250 (1572), 783—756). Bei Emulsionen wurden sie durch Ultrazentrifugenmessungen ermittelt, bei Pulvern durch Siebanalyse. Die mittleren Teilchendurchmesser stellen Gew.-Mittelwerte dar.

Die Bestimmung der Packstärke erfolgte in Anlehnung an ASTM-D 1937—70, nach dem EDV-Prüfverfahren 499: Die Bestimmung der Packstärke dient der Ermittlung einer "Brückenbildung" von Pulvern in einem Zylindergefäß unter Einfluß einer Kraft und ist definiert als kleinste Kraft, bei der eine Brückenbildung eintritt. Die Größe der Packstärke ergibt eine Aussage über die Rieselfähigkeit eines Pulvers.

## Patentanspruch

Verfahren zur Herstellung von Polymerisatgemischen in Pulverform aus
A) 90—20 Gew.-% wenigstens eines weichen kautschukelastichen Polymerisats mit einer Glasübergangstemperatur ≤35°C und
B) 10—80 Gew.-% eines Pfropfkautschuks, dessen Kautschukanteil zwischen 10 und 50 Gew-% beträgt und der eine Glasübergangstemperatur <20°C hat,
dadurch gekennzeichnet, daß man
in einer ersten Stufe ein Gemisch eines Latex von A) und eines Teils des erforderlichen Latex von B) bei Temperaturen von 20—100°C durch Zusatz eines Koaguliermittels koaguliert,
in einer zweiten Stufe den noch fehlenden Teil des Latex von B) in einer Menge von 5—25 Gew.-% (betogen auf die Gesamtmischung) zufügt so daß das gewünschte Mengenverhältnis von A) und B) erreicht ist, wobei gegebenenfalls gleichzeitig oder danach weiteres Koaguliermittel und/oder Wasser zugefügt wird, bis ein Feststoff/Wasser-Gewichtsverhältnis von 1:3 bis 1:15 erreicht ist, und
in einer dritten Stufe das ausgefällte Gemisch von A) und B) von der wäßrigen Phase trennt und trocknet.

## Revendication

Procédé de production de mélanges de polymères sous foreme de poudre à partier de
A) 90 à 20% en poids d'au moins un polymère mou ayant l'élasticité du caoutchouc, avec une température de transition vitreuse inférieure ou égale à 35°C, et
B) 10 à 80% en poids d'un caoutchouc greffé dont la portion caoutchouc s'élève entre 10 et 50% en poids et qui a une température de transition vitreuse inférieure à 20°C,
caractérisé en ce que:
dans une première étape, on coagule un mélange d'un latex de A) et d'une partie de latex nécessaire de B) à des températures de 20 à 100°C par addition d'un agent coagulant,
dans une deuxième étape, on ajoute la partie encore manquante du latex de B), en quantité de 5 à 25% en poids (par rapport au mélange total), de manière que le rapport quantitatif désiré de A) à B) soit atteint, et on ajoute, la cas échéant, en même temps ou ensuite une quantité supplémentaire d'agent coagulant et/ ou d'eau jusqu'à ce qu'un rapport du poids de matière solide au poids d'eau de 1:3 à 1:15 ait été atteint, et
dans un troisième étape, on sépare le mélange précipité de A) et B) de la phase aqueuse et on le sèche.

**Claim**

A process for the preparation of polymer mixtures in powder form from

A) 90—20% by weight of at least one flexible rubber elastic polymer having a glass transition temperature of ≤35°C and

B) 10—80% by weight of a graft rubber the rubber portion of which amounts to 10—50% by weight and which has a glass transition temperature of <20°C,

characterised in that

in the first stage, a mixture of a latex of A) and a portion of the required latex of B) is coagulated at temperatures from 20 to 100°C by the addition of a coagulating agent,

in a second stage, the remaining portion of the latex of B) is added in a quantity of from 5 to 25% by weight (based on the total mixture) so that the required quantitative ratio of A) and B) is obtained, further coagulating agent and/or water being optionally added at the same time or thereafter until a solids/water ratio by weight of from 1:3 to 1:15 is obtained and

in a third stage, the precipitate mixture of A) and B) is separated from the aqueous phase and dried.